# EUROPEAN PATENT SPECIFICATION

(11) **EP 3 280 153 B1**
(45) Date of publication and mention of the grant of the patent: **11.03.2020**
(21) Application number: 15886989.1
(22) Date of filing: 03.04.2015
(51) Int. Cl.: H04R 1/10, G03B 29/00, H04R 5/033

(54) **HEAD-MOUNTED ELECTRONIC DEVICE**
KOPFMONTIERTE ELEKTRONISCHE VORRICHTUNG
DISPOSITIF ÉLECTRONIQUE À PORTER SUR LA TÊTE

(43) Date of publication of application: 07.02.2018
(73) Proprietor: Shenzhen Royole Technologies Co., Ltd, Shenzhen, Guangdong 518172 (CN)
(72) Inventor: JIANG, Chao, Shenzhen Guangdong 518052 (CN); LIU, Zihong, Shenzhen Guangdong 518052 (CN)
(74) Representative: Plougmann Vingtoft a/s
(86) International application number: PCT/CN2015/075918
(87) International publication number: WO 2016/155019

(56) References cited:
- CN-A- 102 447 991
- CN-A- 103 064 187
- CN-U- 204 229 050
- DE-A1- 4 034 096
- KR-U- 20110 008 625
- US-A- 5 144 678
- US-A1- 2011 007 908
- US-A1- 2011 194 029
- US-A1- 2013 300 949

## Description

### FIELD

The present disclosure relates to a technology of automatic control, and particularly to a head-mounted electronic device having a function of automatic control.

### BACKGROUND

At present, a wearable electronic device becomes more and more popular because of its great visual experience effect. The wearable electronic device usually includes a video part and an audio part. In order to achieve a great audio effect, some wearable electronic devices adopt a head-mounted headphone. In this case, the video part is rotatably connected to the head-mounted headphone. When the wearable electronic device is not in use, the video part is rotated to a position where the video part is substantially coincided with the head-mounted headphone for a convenient storage. When the wearable electronic device is needed to be used, the video part is rotated to a position defining an included angle of substantially 90 degrees between the video part and the head-mounted headphone. Accordingly, when the wearable electronic device is put on, the video part is located in front of eyes.

When the user wears the wearable video device to view video and needs to take off the wearable video device midway, the user usually needs to pause the video play manually at first and then to take off the wearable video device, so as to prevent a playback of some video content in subsequent. However, this process is pretty cumbersome.

US2011194029A1 relates to a head-mounted display (HMD) device, and capacitive touch sensors are integrated with the head-mounted display (HMD) device or other video eyewear devices to create a more reliable and more intuitive user interface. The sensors, which may be implemented as an array, control various aspects of a left and right channel multimedia presentation, such as interpupillary distance or stereoscopic convergence, brightness, volume, or power mode.

US2013300949A1 relates to a head mount display, including: a display section displaying video pictures for the left and right eyes; an audio output section outputting sound accompanying the video pictures; a user operation section operated by the user to adjust the volume of the sound outputted by the audio output section; a mounting sensor detecting whether or not the user has worn the head mount display; and a control section controlling the operation to adjust the volume requested by the user by operating the user operation section in accordance with a detection result from the mounting sensor.

US2011007908A1 relate to methods and apparatuses for capacitive sensing. In one example, a speaker includes a diaphragm and an electrically conductive material. The speaker electrically conductive material is adapted to form an electrode to measure capacitance.

US5144678Arelates to a headset of a type which includes a pair of earmuff devices at opposite ends of a head band, which automatically switches an electronic circuit on or off when the headset is placed on the head or taken off, in a simple and rugged construction. Each earmuff device is of the type that includes a largely rigid housing and a soft resilient cushion mounted on the housing and designed to receive the ear of the wearer and press against the side of the wearer's head which surrounds his ear. A switch connected to the circuit includes an actuating device that is depressed and released along with the cushion. One type of switch is a mechanical type whose actuator device has a front end lying against a rear side of the cushion to be deflected and operate the switch when the cushion is rearwardly deflected during placement on the wearer's head. Another switch includes an electrically conductive element lying on the forward surface of the cushion to directly contact the wearer's skin, and a detect subcircuit which is responsive to the electrical potential of the wearer's body to switch the electronic circuit.

DE4034096A1 relates to an automatic on=off switching circuitry, which includes at least one sensor, responsive to the movement, or its change, and a switching circuit with a charge and discharge capacitor(s). The latter are charged or discharged in response to the sensor signals. Pref. the capacitors in the switching circuit from part of a voltage doubling circuit, energized by the sensor. A circuit may be included in the switching circuit, controlling typically a control voltage derived from the sensor movement.

### SUMMARY

According to the present invention, there is provided a head-mounted electronic device as defined in claim 1.

Further embodiments of the invention are defined in the dependent claims.

### BRIEF DESCRIPTION OF THE DRAWINGS

The following accompanying drawings are used for illustrating various embodiments of the present disclosure in detail in combination with specific embodiments. It should be understood that various elements illustrated in the accompanying drawings do not represent actual sizes and scale relations, and the accompanying drawings are only schematic views intended for clear illustration. Thus, the accompanying drawings should not be construed to limit the present disclosure.
Fig. 1 is a schematic view of a head-mounted electronic device provided in a first embodiment of the present disclosure.
Fig. 2 is a block diagram of the head-mounted electronic device in Fig. 1.
Fig. 3 is a partially exploded view of the head-mounted electronic device in Fig. 1.
Fig. 4 is a schematic view of a head-mounted electronic device provided in a second embodiment of the present disclosure.
Fig. 5 is a partial section view of the head-mounted electronic device in Fig. 4.
Fig. 6 is a schematic view of a head-mounted electronic device provided in a third embodiment of the present disclosure.
Fig. 7 is a schematic view of a head-mounted electronic device provided in a fourth embodiment of the present disclosure.
Fig. 8 is section view of an elastic headband of the head-mounted electronic device in Fig. 7.
Fig. 9 is a section view of an elastic headband of a head-mounted electronic device provided in a fifth embodiment of the present disclosure.

### DETAILED DESCRIPTION

In order to make the objectives, technical solutions and advantages of the present disclosure more definite and clear, the present disclosure is further illustrated in detail in combination with a plurality of embodiments and accompanying drawings. It should be understood that, the specific embodiments described herein are only used for explaining the present disclosure and not for limiting the present disclosure. In addition, the presentation doesn't represent actual scale relations among various elements, but is only intended for schematic illustration.

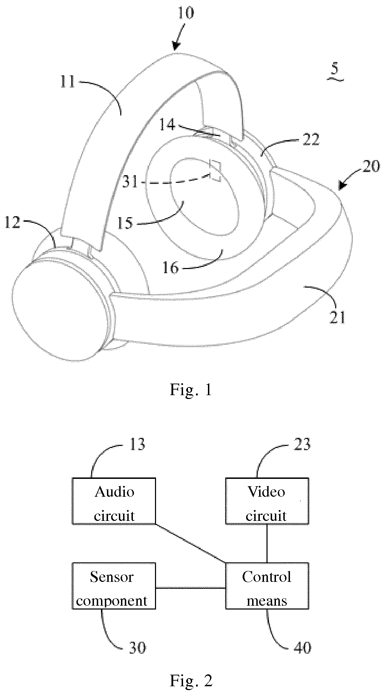

In combination with Fig. 1 to Fig. 3, which are a schematic view, a block diagram and a partially exploded view of a head-mounted electronic device 5 provided in a first embodiment of the present disclosure, the head-mounted electronic device 5 is a head-mounted displayer in the embodiment, and includes a head-mounted headphone 10, a display component 20, a sensor component 31 and a control means 40.

The head-mounted headphone 10 includes an elastic headband 11, two sound generators 12 and an audio circuit 13. The elastic headband 11 is U-shaped and configured to be deformed to provide a stress which presses the sound generator against ears of the user when the user wears the headphone 10. Each of the two sound generators 12 includes a moving piece 14, a loudspeaker (not illustrated in the drawings), a sounding surface 15 and an earmuff 16. The moving piece 14 includes an annular wall 17 and an engaging portion 18 extending outwards from the annular wall 17. The loudspeaker is disposed in a space surrounded by the annular wall 17, and the sounding surface 15 is located at a side of the loudspeaker in which sound is emitted, that is the sound is emitted from the sounding surface 15. The earmuff 16 is fixed to the sounding surface 15. The engaging portion 18 is moveably connected to the elastic headband 11, so that the sound generator 12 may move with respect to the elastic headband 11, and thus it is convenient to adjust the sound generator 12 to positions suitable for different users to wear the head-mounted electronic device 5.

The display component 20 includes a U-shaped display member 21 configured for displaying an image to be viewed by the user, two connecting pieces 22 located at two opposite end parts of the display member 21 and a video circuit 23. The video circuit 23 is accommodated in the display member 21, an optical unit (not illustrated in the drawings) in cooperation with the video circuit 23 is accommodated in middle of the display member 21, and the video circuit 23 has a micro display unit and a matched control circuit. An image displayed by the micro display unit is projected to user's eyes in an optical path defined by the optical unit, so that the user can view an enlarged virtual image. A working principle of the display component 20 is familiar to those skilled in the related art, and thus will not be repeated in the present specification. The connecting piece 22 has an annular shape, and the annular wall 17 of the headphone 10 can just be partially accommodated in the connecting piece 22, so that the annular wall 17 may rotate in the connecting piece 22.

The sensor component 31 is arranged to the headphone 10 and configured for sensing a using state of the headphone. In the embodiment, the sensor component 31 includes a pressure sensor arranged to the headphone 10. In the embodiment, the pressure sensor is arranged to the sounding surface 15 of the sound generator 12, specifically an area of the sounding surface 15 covered by the earmuff 16 or a part of the earmuff 16, so as to sense a pressure applied to the headphone 10 when the user puts on the headphone 10. A predetermined range of pressure, for example being larger than a certain pressure value, may be defined in advance. When the pressure value sensed by the pressure sensor is in the predetermined range, the headphone is judged to be in a wearing state, otherwise to be in a non-wearing state. Certainly, the pressure sensor is not limited to one as in the embodiment, and a plurality of pressure sensors may be provided, or each of the sound generators may be provided with the pressure sensor. In addition, the pressure sensor may also be arranged to a portion of the elastic headband 11 apt to contact the user's head, for example a middle portion of an inward surface of the elastic headband 11, which can also implement a same function.

The control means 40 is electrically connected to the sensor component 31 and configured to control the display component 20 to respond when the sensor component 31 senses that the headphone 10 is switched between the wearing state and the non-wearing state. Certainly, the control means 40 may further control the headphone 10 to respond. Specifically, the control means 40 is further electrically connected to the audio circuit 13 and the video circuit 23, and is disposed in the display component 20 or the headphone 10, which may be determined according to an accommodating space defined by a specific structure. In the embodiment, when the pressure value sensed by the pressure sensor is larger than a pressure value A, i.e. in the above predetermined range, the headphone is in the wearing state; when the pressure value sensed by the pressure sensor is smaller than the pressure value A or a pressure value B (B is smaller than A), i.e. in a range corresponding to the non-wearing state, the headphone is in the non-wearing state. The control means 40 controls the display component 20 in a video-play-paused state to play video, when the pressure value detected by the pressure sensor changing from the range corresponding to the non-wearing state into the predetermined range of the wearing state. Certainly, the control means 40 can further control the headphone 10 to play the sound.

In the use process, after putting on the headphone 10, the user can rotate the display component 20 to a position where the display component 20 has an included angle of substantial 90 degrees with the headphone 10. At this moment, the display component 20 is located in front close to the user's eyes, so that the user may view the images. After the headphone 10 is put on, because of an elastic force of the elastic headband 11, the pressure value sensed by the pressure sensor is larger than a predetermined value, i.e. in the predetermined range, and thus the headphone 10 is judged to be in the wearing state by the control means 40. In the process of using some functions of the head-mounted electronic device 5, for example playing the video, if the user has other matters to deal with and needs to take off the electronic device 5 and pause playing the video, the user may only need to take off the head-mounted electronic device 5. At this moment, as the pressure value sensed by the pressure sensor is almost zero, i.e. outside of the predetermined range, the control means 40 judges that the headphone is in the non-wearing state and controls the video circuit 23 and the audio circuit 13 to stop working, thus pausing the play of video and audio. As the video play can be stopped without any other operations during the user taking off the head-mounted electronic device 5, it is very convenient for the user to use and the user experience is greatly improved. It should be pointed out that, pausing of the video play of the display component 20 may indicate that the image is shown, but in a still state, or no image is shown, i.e. a blank screen, or the blank screen occurs automatically after the still image is shown for a period of time. All of the methods above can realize the purpose of pausing the video play.

Preferably, the headphone is judged to be in the wearing state when the pressure value sensed by the pressure sensor is in the predetermined range and the pressure value stays in the predetermined range over a first preset time, so that it is possible to identify that the headphone is in the wearing state more accurately.

In other embodiments, the control means 40 may also control the display component 20 to respond when the sensor component 31 senses that a relative position between the headphone 10 and the display component 20 is in a predetermined range, i.e., the display component 20 in the video-play-paused state plays video when the headphone 10 is switched from the non-wearing state to the wearing state. Preferably, for the display component 20 in the video-play-paused state, when the headphone 10 is switched from the non-wearing state to the wearing state and the wearing state lasts over a second preset time, the control means 40 controls the display component 20 to play video and/or the headphone 10 to output audio. Such design reserves a certain adjustment time for the user before playing video and/or audio, after the user puts on the head-mounted electronic device 5, which is beneficial for the user to view the video in a better state. Certainly, the function described in this paragraph and the preceding functions can be superposed in one same head-mounted electronic device 5.

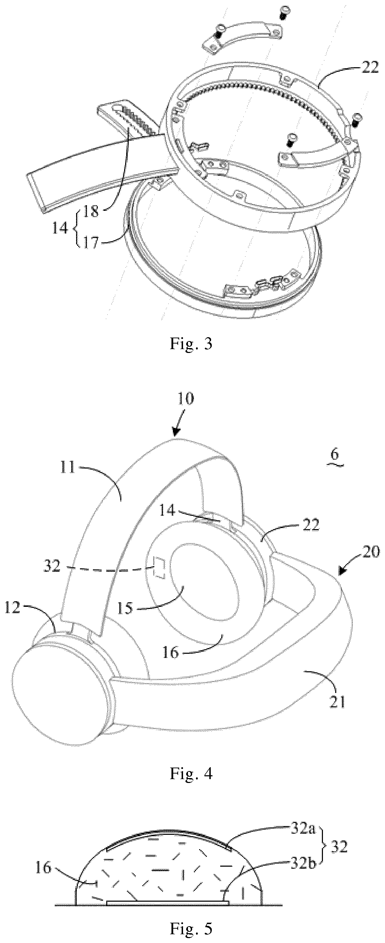

In combination with Fig. 4 and Fig. 5, which are a schematic view and a partial section view of a head-mounted electronic device 6 provided in a second embodiment of the present disclosure, the second embodiment mainly differs from the first embodiment in a sensor component 32. The sensor component 32 includes a first metal piece 32a and a second metal piece 32b, and at least a part of the earmuff 16 is located between the first metal piece 32a and the second metal piece 32b. In the embodiment, the first metal piece 32a may be attached to an outside coating of the earmuff 16, for example an inner side of leather, and the second metal piece 32b may be attached to the sounding surface. In this case, a part of filler (for example foam materials) of the earmuff 16 is erected between the first metal piece 32a and the second metal piece 32b, and hence the sensor component 32 is configured as a capacitor. When the user puts on the headphone 10, a distance between the first metal piece 32a and the second metal piece 32b changes, so a capacitance of the sensor component 32 changes. Accordingly, a change state of the capacitance reflects that whether the user wears the headphone 10 or not. Other working principles are similar to those of the first embodiment, and will not be repeated herein.

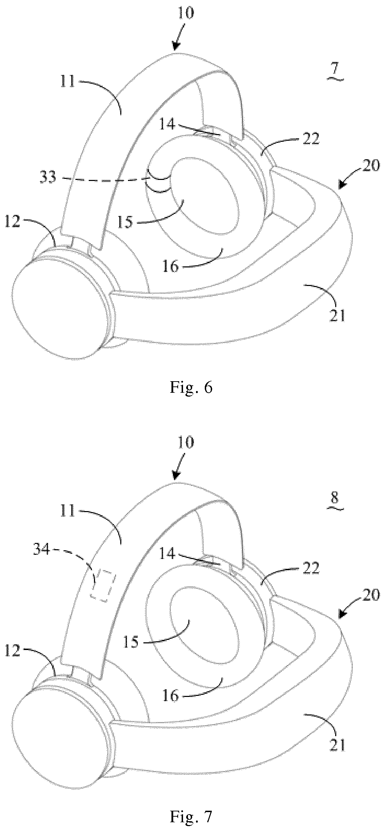

In combination with Fig. 6, which is a schematic view of a head-mounted electronic device 7 provided in a third embodiment of the present disclosure, the third embodiment mainly differs from the first embodiment in a sensor component 33. The sensor component 33 includes a capacitive touch sensor arranged to the earmuff 16. For example, the capacitive touch sensor is arranged to an outer surface of the earmuff 16 directly facing the user, i.e., the capacitive touch sensor contacts the skin of the user directly for sensing. Or, the capacitive touch sensor is arranged to an inner side of the outside coating of the earmuff 16, i.e., the capacitive touch sensor contacts the skin of the user indirectly for sensing. It may be understood that a position of the capacitive touch sensor is not limited, as long as the capacitive touch sensor may sense the contact with the user. Certainly, the capacitive touch sensor may also be arranged to the sounding surface 15. In the third embodiment, it is possible to know whether the headphone is in the wearing state by using the capacitive touch sensor to sense its contact with the skin of the user. In the present disclosure, the sensed contact with the skin of the user includes the above direct contact and the above indirect contact. Other principles are similar to those of the first embodiment, and will not be repeated herein.

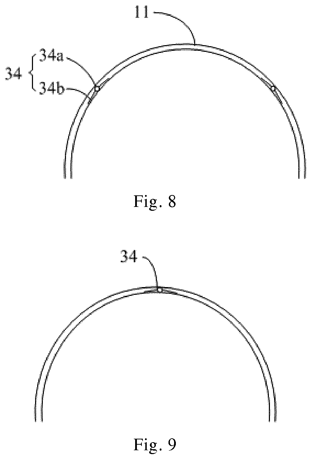

In combination with Fig. 7 and Fig. 8, which are a schematic view of a head-mounted electronic device provided in a fourth embodiment of the present disclosure and a section view of an elastic headband of the head-mounted electronic device, the fourth embodiment mainly differs from the first embodiment in a sensor component 34. The sensor component 34 is an angle sensor arranged to the elastic headband 11, and includes a fixed portion 34a fixed to the elastic headband and two movable portions 34b located at two sides of the fixed portion 34a. The movable portion 34b keeps abutting against the elastic headband 11. Accordingly, when the elastic headband is deformed at a position of the angle sensor, the angle sensor may sense such deformation. In the embodiment, two angle sensors are respectively provided at two sides of the middle of the elastic headband 11 where the deformation extent is relatively large, so as to sense the angel change accurately. It should be understood that, the number and the positions of the angle sensors are not limited to the above manner. For example, one angel sensor may be provided at the middle of the elastic headband 11. As illustrated in Fig. 9, in the fifth embodiment, the angle sensor senses whether the elastic headband 11 is expanded when the user puts on the headphone by sensing the deformation of the elastic headband 11, so as to determine whether the headphone is in the wearing state. The other working principles are similar to those of the first embodiment, and will not be repeated herein.

Certainly, in the various embodiments described above, specific solutions in different embodiments can be used in combination with one another. For example, the pressure sensor is used in conjunction with the touch sensor, thus achieving a more accurate judgment. In addition, it should be noted that, the above head-mounted electronic device is not limited to playing the video, but may also be another head-mounted electronic device, such as a head-mounted game device, a head-mounted navigation device and the like. All of the head-mounted electronic devices having content of the present disclosure can realize the above convenient function of automatic control.

The above descriptions are only preferable embodiments of the present disclosure and are not intended to limit the scope of the present invention, which is defined by the appended claims.

## Claims

1. A head-mounted electronic device, comprising:
a U-shaped head-mounted headphone (10);
a U-shaped display component (20) rotatably connected to the headphone (10);
a sensor component (31, 32, 33, 34) arranged to the headphone (10) and configured to sense a wearing state of the headphone (10); and
a control means (40) electrically connected to the sensor component (31, 32, 33, 34) and configured to control the display component (20) and/or the headphone (10) to make a response when the sensor component (31, 32, 33, 34) senses that the headphone (10) is switched between the wearing state and a non-wearing state,
wherein the response made by the display component (20) comprises that the display component (20) in a video-play-paused state plays video when the headphone (10) is switched from the non-wearing state to the wearing state and the wearing state lasts over a second preset time.

2. The head-mounted electronic device according to claim 1, wherein the sensor component (31) comprises at least one pressure sensor, and the headphone (10) is judged to be in the wearing state when a pressure value sensed by the pressure sensor is in a predetermined range.

3. The head-mounted electronic device according to claim 2, wherein the headphone (10) is judged to be in the wearing state when the pressure value sensed by the pressure sensor is in the predetermined range and stays in the predetermined range over a first preset time.

4. The head-mounted electronic device according to claim 2, wherein the headphone (10) comprises a U-shaped elastic headband (11) and two sound generators (12) connected to the elastic headband (11), and the pressure sensor is arranged to one of the two sound generators (12).

5. The head-mounted electronic device according to claim 4, wherein each of the two sound generators (12) comprises a sounding surface (15) and an earmuff (16), sound is emitted from the sounding surface (15), and the earmuff (16) is arranged to the sounding surface (15),
the earmuff (16) is configured to be pressed in the wearing state,
the pressure sensor is arranged to the sounding surface (15) or the earmuff (16).

6. The head-mounted electronic device according to claim 1, wherein the headphone (10) comprises two sound generators (12), each of the two sound generators (12) has an earmuff (16), and the earmuff (16) is configured to be pressed in the wearing state,
the sensor component (32) comprises a first metal piece (32a) and a second metal piece (32b), and at least a part of the earmuff (16) is located between the first metal piece (32a) and the second metal piece (32b),
the headphone (10) is judged to be in the wearing state when the sensor component (32) senses that a capacitance value between the first metal piece (32a) and the second metal piece (32b) is in a predetermined range.

7. The head-mounted electronic device according to claim 1, wherein the headphone (10) comprises two sound generators (12), each of the two sound generators (12) comprises a sounding surface (15) and an earmuff (16), sound is emitted from the sounding surface (15), and the earmuff (16) is arranged to the sounding surface (15),
the sensor component (33) comprises at least one capacitive touch sensor arranged to the sounding surface (15) or the earmuff (16), and
the headphone (10) is judged to be in the wearing state when the capacitive touch sensor senses a skin touch.

8. The head-mounted electronic device according to claim 1, wherein the sensor component (34) comprises at least one angle sensor arranged to the elastic headband (11), and the headphone (10) is judged to be in the wearing state when an angle value sensed by the angle sensor is in a predetermined range.

9. The head-mounted electronic device according to claim 8, wherein the sensor component (34) comprises one angle sensor disposed at a middle portion of the elastic headband (11) and configured to sense a deformation degree of the elastic headband (11).

10. The head-mounted electronic device according to claim 8, wherein the sensor component (34) comprises two angle sensors respectively disposed at two sides of a middle portion of the elastic headband (11) and configured to sense a deformation degree of the elastic headband (11).

11. The head-mounted electronic device according to any one of claims 1 to 10, wherein the response made by the display component (20) comprises that the display component (20) in a video-play state pauses the video play when the headphone (10) is switched from the wearing state to the non-wearing state.

## Patentansprüche

1. Am Kopf montiertes elektronisches Gerät, umfassend:
einen U-förmigen am Kopf montierten Kopfhörer (10);
eine U-förmige Anzeigekomponente (20), die drehbar mit dem Kopfhörer (10) verbunden ist;
eine Sensorkomponente (31, 32, 33, 34), die an dem Kopfhörer (10) angeordnet und konfiguriert ist, um einen Tragezustand des Kopfhörers (10) zu erfassen; und
ein Steuermittel (40), das elektrisch mit der Sensorkomponente (31, 32, 33, 34) verbunden und konfiguriert ist, um die Anzeigekomponente (20) und / oder den Kopfhörer (10) zu steuern, um eine korrelative Reaktion auszuführen, wenn die Sensorkomponente (31, 32, 33, 34) erfasst, dass der Kopfhörer (10) zwischen dem Tragezustand und einem Nicht-Tragezustand umgeschaltet ist,
wobei die von der Anzeigekomponente (20) gemachte Antwort umfasst, dass die Anzeigekomponente (20) in einem Zustand mit angehaltener Videowiedergabe ein Video abspielt, wenn der Kopfhörer (10) aus dem Nicht-Tragezustand in den Tragezustand geschaltet wird und der Tragezustand über eine zweite voreingestellte Zeit andauert.

2. Am Kopf montiertes elektronisches Gerät nach Anspruch 1, wobei die Sensorkomponente (31) mindestens einen Drucksensor umfasst und beurteilt wird, dass sich der Kopfhörer (10) im Tragezustand befindet, wenn ein vom Drucksensor erfasster Druckwert in einem vorbestimmten Bereich liegt.

3. Am Kopf montiertes elektronisches Gerät nach Anspruch 2, wobei beurteilt wird, dass sich der Kopfhörer (10) im Tragezustand befindet, wenn der vom Drucksensor erfasste Druckwert in dem vorbestimmten Bereich liegt und über eine erste voreingestellte Zeit in dem vorbestimmten Bereich bleibt.

4. Am Kopf montiertes elektronisches Gerät nach Anspruch 2, wobei der Kopfhörer (10) ein U-förmiges elastisches Kopfband (11) und zwei mit dem elastischen Kopfband (11) verbundene Schallerzeuger (12) umfasst und der Drucksensor an einem der beiden Schallerzeuger (12) angeordnet ist.

5. Am Kopf montiertes elektronisches Gerät nach Anspruch 4, wobei jeder der beiden Schallerzeuger (12) eine Schallfläche (15) und einen Ohrenschützer (16) umfasst, Schall von der Schallfläche (15) emittiert wird und der Ohrenschützer (16) an der Schallfläche (15) angeordnet ist,
wobei der Ohrenschützer (16) so konfiguriert ist, dass er im getragenen Zustand gedrückt ist,
wobei die Sensorkomponente an der Schallfläche (15) oder dem Ohrenschützer (16) angeordnet.

6. Am Kopf montiertes elektronisches Gerät nach Anspruch 1, wobei der Kopfhörer (10) zwei Schallerzeuger (12) umfasst, jeder der zwei Schallerzeuger (12) einen Ohrenschützer (16) aufweist und der Ohrenschützer (16) konfiguriert ist, um im Tragezustand gedrückt zu sein,
wobei die Sensorkomponente (32) ein erstes Metallstück (32a) umfasst und ein zweites Metallstück (32b) und mindestens ein Teil des Ohrenschützers (16) zwischen dem ersten Metallstück (32a) und dem zweiten Metallstück (32b) angeordnet ist,
es wird beurteilt, dass sich der Kopfhörer (10) im Tragezustand befindet, wenn die Sensorkomponente (32) erfasst, dass sich ein Kapazitätswert zwischen dem ersten Metallstück (32a) und dem zweiten Metallstück (32b) in einem vorgegebenen Bereich befindet.

7. Am Kopf montiertes elektronisches Gerät nach Anspruch 1, wobei der Kopfhörer (10) zwei Schallerzeuger (12) umfasst, wobei jeder der zwei Schallerzeuger (12) eine Schallfläche (15) und einen Ohrenschützer (16) umfasst, Schall von der Schallfläche (15) emittiert wird und der Ohrenschützer (16) an der Schallfläche (15) angeordnet ist,
die Sensorkomponente (33) umfasst mindestens einen kapazitiven Berührungssensor, der an der Schallfläche (15) oder dem Ohrenschützer (16) angeordnet ist, und
es wird beurteilt, dass sich der Kopfhörer (10) im Tragezustand befindet, wenn der kapazitive Berührungssensor eine Hautberührung wahrnimmt.

8. Am Kopf montiertes elektronisches Gerät nach Anspruch 1, wobei die Sensorkomponente (34) mindestens einen Winkelsensor umfasst, der an dem elastischen Kopfband (11) angeordnet ist, und der Kopfhörer (10) als im Tragezustand befindlich beurteilt wird, wenn sich ein von dem Winkelsensor erfasster Winkelwert in einem vorgegebener Bereich befindet.

9. Am Kopf montiertes elektronisches Gerät nach Anspruch 8, wobei die Sensorkomponente (34) einen Winkelsensor umfasst, der an einem mittleren Abschnitt des elastischen Kopfbands (11) angeordnet und konfiguriert ist, um einen Verformungsgrad des elastischen Kopfbands (11) zu erfassen.

10. Am Kopf montiertes elektronisches Gerät nach Anspruch 8, wobei die Sensorkomponente (34) zwei Winkelsensoren umfasst, die jeweils an zwei Seiten eines Mittelabschnitts des elastischen Kopfbands (11) angeordnet sind und so konfiguriert sind, dass sie einen Verformungsgrad des elastischen Kopfbands (11) erfassen.

11. Am Kopf angebrachtes elektronisches Gerät nach einem der Ansprüche 1 bis 10, wobei die von der Anzeigekomponente (20) gemachte Antwort umfasst, dass die Anzeigekomponente (20) in einem Video-Abspielzustand das Video-Abspiel anhält, wenn der Kopfhörer (10) vom Tragezustand in den nicht tragender Zustand umschaltet.

## Revendications

1. Dispositif électronique monté sur la tête, comprenant :
un casque d'écoute monté sur la tête en forme de U (10) ;
un composant d'affichage en forme de U (20) connecté de manière rotative au casque d'écoute (10) ;
un composant de capteur (31, 32, 33, 34) agencé sur le casque d'écoute (10) et conçu pour détecter un état de port du casque d'écoute (10) ; et
un moyen de commande (40) connecté électriquement au composant de capteur (31, 32, 33, 34) et conçu pour commander le composant d'affichage (20) et/ou le casque d'écoute (10) pour faire une réponse lorsque le composant de capteur (31, 32, 33, 34) détecte que le casque d'écoute (10) est commuté entre l'état de port et un état de non-port,
dans lequel la réponse faite par le composant d'affichage (20) comprend le fait que le composant d'affichage (20) dans un état de pause de jeu vidéo joue la vidéo lorsque le casque d'écoute (10) est commuté depuis l'état de non-port à l'état de port et l'état de port dure plus d'une seconde durée préréglée.

2. Dispositif électronique monté sur la tête selon la revendication 1, dans lequel le composant de capteur (31) comprend au moins un capteur de pression et le casque d'écoute (10) est jugé être dans l'état de port lorsqu'une valeur de pression détectée par le capteur de pression est dans une plage prédéfinie.

3. Dispositif électronique monté sur la tête selon la revendication 2, dans lequel le casque d'écoute (10) est jugé être dans l'état de port lorsque la valeur de la pression détectée par le capteur de pression est dans la plage prédéfinie et reste dans la plage prédéfinie sur une première durée préréglée.

4. Dispositif électronique monté sur la tête selon la revendication 2, dans lequel le casque d'écoute (10) comprend un bandeau élastique en forme de U (11) et deux générateurs de sons (12) connectés au bandeau élastique (11) et le capteur de pression est agencé pour l'un des deux générateurs de sons (12).

5. Dispositif électronique monté sur la tête selon la revendication 4, dans lequel chacun des deux générateurs de sons (12) comprend une surface sonore (15) et une coquille antibruit (16), le son est émis à partir de la surface sonore (15) et la coquille antibruit (16) est agencée pour la surface sonore (15),
la coquille antibruit (16) est conçue pour être pressée dans l'état de port,
le capteur de pression est agencé pour la surface sonore (15) ou la coquille antibruit (16).

6. Dispositif électronique monté sur la tête selon la revendication 1, dans lequel le casque d'écoute (10) comprend deux générateurs de sons (12), chacun des deux générateurs de sons (12) présente une coquille antibruit (16) et la coquille antibruit (16) est conçue pour être pressée dans l'état de port,
le composant de capteur (32) comprend une première pièce métallique (32a) et une seconde pièce métallique (32b) et au moins une partie de la coquille antibruit (16) est située entre la première pièce métallique (32a) et la seconde pièce métallique (32b),
le casque d'écoute (10) est jugé être dans l'état de port lorsque le composant de capteur (32) détecte qu'une valeur de capacité entre la première pièce métallique (32a) et la seconde pièce métallique (32b) est dans une plage prédéfinie.

7. Dispositif électronique monté sur la tête selon la revendication 1, dans lequel le casque d'écoute (10) comprend deux générateurs de sons (12), chacun des deux générateurs de sons (12) comprend une surface sonore (15) et une coquille antibruit (16), le son est émis à partir de la surface sonore (15) et la coquille antibruit (16) est agencée pour la surface sonore (15),
le composant de capteur (33) comprend au moins un capteur tactile capacitif agencé pour la surface sonore (15) ou la coquille antibruit (16) et
le casque d'écoute (10) est jugé être dans l'état de port lorsque le capteur tactile capacitif détecte une touche de la peau.

8. Dispositif électronique monté sur la tête selon la revendication 1, dans lequel le composant de capteur (34) comprend au moins un capteur d'angle agencé sur le bandeau élastique (11) et le casque d'écoute (10) est jugé être dans l'état de port lorsqu'une valeur de pression détectée par le capteur d'angle est dans une plage prédéfinie.

9. Dispositif électronique monté sur la tête selon la revendication 8, dans lequel le composant de capteur (34) comprend un capteur d'angle disposé à une partie centrale du bandeau élastique (11) et conçu pour détecter un degré de déformation du bandeau élastique (11).

10. Dispositif électronique monté sur la tête selon la revendication 8, dans lequel le composant de capteur (34) comprend deux capteurs d'angle disposés respectivement sur deux côtés d'une partie centrale du bandeau élastique (11) et conçus pour détecter un degré de déformation du bandeau élastique (11).

11. Dispositif électronique monté sur la tête selon l'une quelconque des revendications 1 à 10, dans lequel la réponse faite par le composant d'affichage (20) comprend le fait que le composant d'affichage (20) dans un état de jeu vidéo interrompt la lecture vidéo lorsque le casque d'écoute (10) est commuté depuis l'état de port à l'état de non-port.
